# EUROPEAN PATENT APPLICATION

(11) **EP 2 351 949 A1**
(43) Date of publication of application: **03.08.2011**
(21) Application number: 09817250.5
(22) Date of filing: 23.09.2009
(51) Int. Cl.: F16H 3/093, B60K 17/08

(54) **DOUBLE CLUTCH TRANSMISSION**

(30) Priority: 24.09.2008 DE 102008048799
(71) Applicant: Saic Motor Corporation Limited, Shanghai 201203 (CN); Shanghai Automobile Gear Works, Jialing District Shanghai 201800 (CN)
(72) Inventor: BARTLING, Tim, DE-52070 Aachen (DE); NISSEN, Peter, DE-52070 Aachen (DE); ZAKI, Nadir, DE-52062 Aachen (DE)
(74) Representative: Bird Goën & Co
(86) International application number: PCT/CN2009/074134
(87) International publication number: WO 2010/037336

(57) **Abstract**

The invention provides a double clutch transmission (100B), wherein for each of the countershafts (6; 7), between the corresponding driving gear (23; 24) of the corresponding countershaft (6; 7) and at least one of idler gears (8, 9, 10; 11, 12, 13, 14) of the corresponding countershaft (6; 7), there is disposed a bearing (33A; 35A) of the corresponding countershaft (6; 7). The construction of the transmission can be allowed to be more compact according to the invention.

## Description

### TECHNICAL FIELD

The invention relates to a double clutch transmission which comprises: two wet clutches whose input ends are connected with a propeller shaft of a driving engine, and whose output ends are connected with two transmission input shafts arranged coaxially, respectively; two countershafts which are disposed on bearings, and on which shift gears constructed as idler gears can be rotatably disposed; shift gears anti-torsionally and axially arranged on the two transmission input shafts and constructed as fixed gears, which are engaged with the idler gears indirectly or directly to define different gears; and driving gears fixed on the two countershafts and engaged with a differential gear.

### BACKGROUND ART

This kind of the double clutch transmission is known in prior art such as DE 10305241 A1 or DE 102004032498 A1 itself.

### DISCLOSURE OF THE INVENTION

The invention is aimed at providing a compact transmission, in particular a compact double clutch transmission which is still very stable and also very stable in a variable torsional load. A double clutch transmission is provided as a solution and comprises: two wet clutches whose input ends are connected with a propeller shaft of a driving engine, and whose output ends are connected with two transmission input shafts arranged coaxially, respectively; two countershafts which are disposed on bearings, and on which shift gears constructed as idler gears can be rotatably disposed; shift gears anti-torsionally and axially arranged on the two transmission input shafts and constructed as fixed gears, which are engaged with the idler gears indirectly or directly to define different gears; and driving gears fixed on the two countershafts and engaged with a differential gear, wherein for each of the countershafts, between the corresponding driving gear of the corresponding countershaft and at least one of the idler gears of the corresponding countershaft, there is disposed a bearing of the corresponding countershaft, so as to settle the task of the invention.

This is particularly applied to the condition that, for each of the countershafts, bearings of the corresponding countershaft are disposed between the corresponding driving gear of the corresponding countershaft and all the idler gears of the corresponding countershaft. In this condition, this solution is on basis of a basic knowledge that: a certain distance must be arranged between the idler gear and the corresponding driving gear to allow these components to always complete their tasks perfectly. According to this solution, this distance can be used for the corresponding bearing, so that only the minimal additional construction space is needed through the bearing. An extremely compact construction can be ensured in this manner.

The latter is especially applied to the condition that at least one of the driving gears is only disposed at one side or both the two driving gears are only disposed at one side. In this way, the axial construction space can be minimized according to this solution.

In particular, a sealing pad can be disposed between the driving gear and the idler gear, so that a space around the driving gear and the other transmission system such as a differential can be separated from a space of the idler gear, particularly a space of the clutch in a very simple and compact manner, and thus separated oil chambers can be achieved in the simple construction manner for example to use different lubricating oils.

Additionally or alternatively, according to the preceding features, in the double clutch transmission, at least two of the bearings arranged on one side of the transmission are substantially fixed in a single bearing plate at a similar height axially, so as to cope with bearing forces simply and compactly in construction. The latter is especially applied to the condition that at least two of bearings arranged on one side of the transmission at each side surface of the transmission are substantially fixed in a single bearing plate at a similar height axially. In this design scheme, the other components of a corresponding transmission base or a transmission shell can be designed more easily or with a smaller rigidity, in particular the components of the corresponding transmission base or the transmission shell crossing over the transmission, since these components generally only cope with a secondary bearing force, i.e. a torsional force.

Similarly, according to the particular design scheme of the transmission, the other bearings can be arranged in the bearing plate.

### BRIEF DESCRIPTION OF THE DRAWINGS

The other advantageous, objects and features are illustrated according to the following description of the figures, and in these figures a double clutch transmission of the invention is schematically illustrated.
FIG.1 shows a schematical sectional view of the transmission with the countershafts arranged according to the invention.
FIG.2 shows a schematical side view of the important gears and shafts of the transmission of FIG. 1.
FIG.3 is a simple view of the entire arrangement of the invention.
FIG.4 shows a schematical sectional view of the transmission according to the invention.

### REFERENCE SIGNS LIST

| | | | |
|---|---|---|---|
| 1 | first clutch | | |
| 2 | second clutch | | |
| 3 | propeller shaft | | |
| | | | |
| 4 | first transmission input shaft | 24 | second driving gear |
| 5 | second transmission input shaft | 25 | gear |
| 6 | first countershaft | 26 | differential |
| 7 | second countershaft | 27 | intermediate shaft |
| 8 | first idler gear | 28 | first intermediate shaft fixed gear |
| 9 | second idler gear | 29 | second intermediate shaft fixed gear |
| 10 | third idler gear | 30 | first bearing |
| 11 | fourth idler gear | 31 | second bearing |
| 12 | fifth idler gear | 31A | second bearing |
| 13 | sixth idler gear | 32 | third bearing |
| 14 | seventh idler gear | 32A | third bearing |
| 15 | first fixed gear | 33 | fourth bearing |
| 16 | second fixed gear | 33A | fourth bearing |
| 17 | third fixed gear | 34 | fifth bearing |
| 18 | fourth fixed gear | 35 | sixth bearing |
| 19 | first coupling device | 35A | sixth bearing |
| 20 | second coupling device | 36 | first transmission bearing |
| 21 | third coupling device | 37 | second transmission bearing |
| 22 | fourth coupling device | 38 | shaft end |
| 23 | first driving gear | 100 | transmission |

### BEST MODE FOR CARRYING OUT THE INVENTION

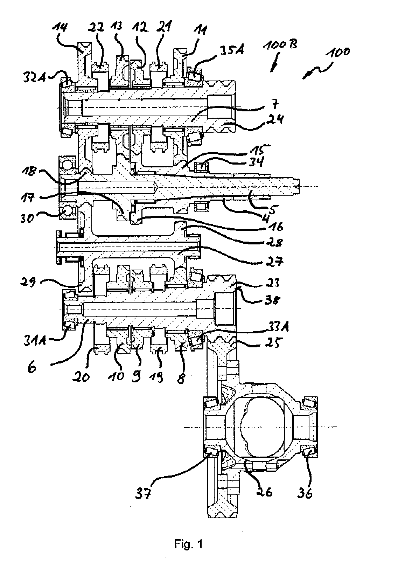

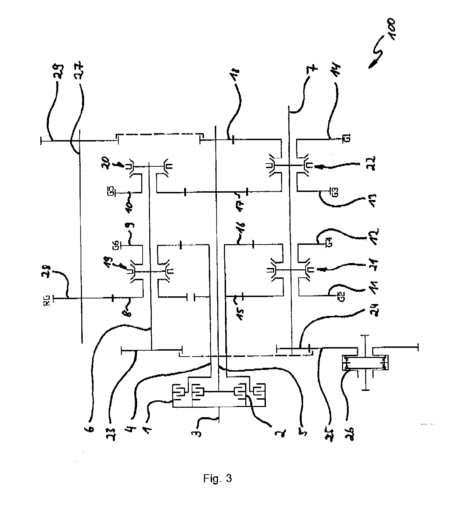

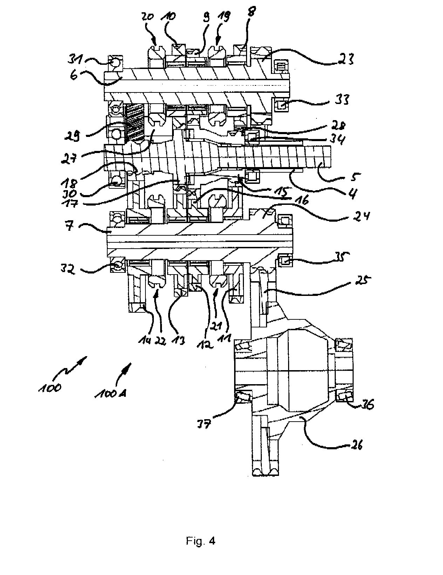

Fig.1-Fig.4 schematically show the aspects of the invention. If there is no specific illustration, the same reference numbers in different figures denote the same or corresponding components. The invention should be understood and explained on basis of all figures.

Fig.1 exemplarily shows a transmission 100 which is a double clutch transmission with a first clutch 1 and a second clutch 2. These two clutches are anti-torsionally connected with a propeller shaft of a driving engine not illustrated in detail here. The driving engine can be an internal combustion engine preferably used in an automobile.

Correspondingly, the first clutch 1 is effectively connected with a first transmission input shaft 4, wherein the first transmission input shaft 4 is constructed as a hollow shaft. Correspondingly, the second clutch 2 is effectively connected with a second transmission input shaft 5, wherein the second transmission input shaft 5 is constructed as a solid shaft.

Furthermore, the double clutch transmission has a first countershaft 6 and a second countershaft 7. At the first countershaft 6, there are arranged a first idler gear 8, a second idler gear 9 and a third idler gear 10. The other idler gears 11, 12, 13 and 14 belong to the second countershaft 7, so that seven idler gears 8 to 14 altogether are provided on the double clutch using these two countershafts 6 and 7. The idler gears 8 to 14 through these two countershafts 6 and 7 can alternately effect fixed gears 15, 16, 17 or 18 of the two transmission input shafts 4 or 5, respectively.

In this condition, the first fixed gear 15 and the second fixed gear 16 belong to the first transmission input shaft 4, and the third fixed gear 17 and the fourth fixed gear 18 belong to the second transmission input shaft 5.

To construct the first double clutch transmission as compactly as possible, the first clutch transmission comprises coupling devices 19, 20, 21 and 22, and two idler gears 8 and 9, 11 and 12 facing axially can be coupled with or decoupled from their corresponding countershaft 6 or 7 respectively by means of these coupling devices.

Adjusting correspondingly, driving power can be transmitted from a propeller shaft 3 to a gear 25 of a differential 26 through the first countershaft 6 by means of the first driving gear 23, or through the second countershaft 7 by means of the second driving gear 24.

A first bearing 30 is a bearing by which the second transmission input shaft 5 can be arranged.

Furthermore, the shaft arrangement of the double clutch transmission also has other bearings 34 and 31A to 35A, by means of which it is possible to not only arrange the two transmission input shafts 4 and 5 advantageously, but also arrange two countershafts 6 and 7. In this condition, the two transmission input shafts 4 and 5 are arranged by the illustrated first bearing 30 on one hand and by a fourth bearing 34 on the other hand.

The first countershaft 6 is disposed by means of the second bearing 31A and the fourth bearing 33A, and the second countershaft 7 is disposed by means of the third bearing 32A and the sixth bearing 35A.

Advantageously, not only the first bearing 30 and the second bearing 31A are at the height of the shaft, but also the third bearing is at the height of the shaft.

For this reason, the bearing arrangment of the double clutch transmission can be constructed with an extreme rigidity.

Furthermore, the differential 26 is reliably disposed within the double clutch transmission by means of a first transmission bearing 36 and a second transmission bearing 37.

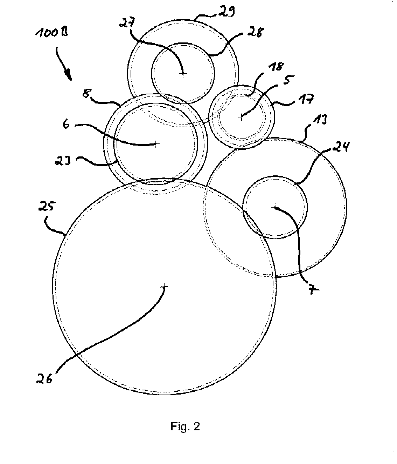

It can be well observed from Fig. 2 how the gear 25 of the differential 26 is engaged with the first driving gear 23 of the first countershaft 6 of the double clutch transmission on one hand and engaged with the second driving gear 24 of the second countershaft 7 of the double clutch transmission on the other hand.

Just to say about the second bearing 31A and the fourth bearing 33A among the bearings of the first countershaft 6, they are constructed as tapered roller bearings respectively, wherein the fourth bearing 33A is not directly disposed at the end of the first countershaft 6, but disposed between the first driving gear 23 of the double clutch transmission and the first idler gear 8 supported by the first countershaft 6 of the double clutch transmission.

The gear 25 is also in effective engagement with the second driving gear 24 of the second countershaft 7. The second countershaft 7 is disposed by means of the third bearing 32A constructed as the tapered roller bearing and the sixth bearing 35A constructed as the tapered roller bearing and arranged between the second driving gear 24 of the double clutch transmission and the fourth idler gear 11 of the double clutch transmission.

Furthermore, the seventh idler gear 14 of the second countershaft 7 can be coupled with a second intermediate shaft fixed gear 29 of the intermediate shaft 27 on one hand and be coupled with the fourth fixed gear 18 of the second transmission input shaft 5 on the other hand, at the height of the shaft.

The bearings disposed on a side surface of the transmission are arranged substantially at the similar height of the shaft, particularly allowing a single bearing plate (not shown) to support all the bearings disposed on one side of the transmission.

The bearing plate then can receive the bearing force which is once altogether on one side of the transmission, so that correspondingly the other components of a corresponding transmission base or a transmission shell (not shown) can be designed more easily or with a smaller rigidity. This is particularly applied to the condition using two correspondingly effective bearing plates disposed on one side of the transmission respectively, so that the components of the transmission base or the transmission shell crossing over the transmission only cope with a secondary bearing force, i.e. a torsional force, and these components can be designed more easily or with a smaller rigidity correspondingly.

The fourth bearing 33A is disposed between the first driving gear 23 and the idler gears 8, 9 and 10 of the first countershaft 6, and the sixth bearing 35A is disposed between the second driving gear 24 and the idler gears 11, 12, 13 and 14 of the second countershaft 7, allowing a sealing member (not shown) to be disposed between the driving gears 23, 24 and idler gears 8 to 14 in a very simple construction manner. For the region of the driving gears 23, 24 and for the region of the gear 25 of the differential 26, the sealing member particularly in the condition of using a wet clutch can use a kind of lubricating oil adapted to the exited demands there, for example a kind of lubricating oil optimized aiming at the lubrication property, and for the other regions of the transmission, and in particular for the clutch, other kinds of lubrication oil optimized aiming at the wet clutch, particularly aiming at a cooling effect can be used.

## Claims

1. A double clutch transmission (100B), comprising:
two wet clutches (1, 2) whose input ends are connected with a propeller shaft (3) of a driving engine, and whose output ends are connected with two transmission input shafts (4, 5) arranged coaxially, respectively;
two countershafts (6, 7) which are disposed on bearings (31A, 32A, 33A, 35A), and on which shift gears constructed as idler gears (8, 9, 10, 11, 12, 13, 14) can be rotatably disposed;
shift gears anti-torsionally and axially arranged on the two transmission input shafts (4, 5) and constructed as fixed gears (15, 16, 17, 18), which are engaged with the idler gears (8, 9, 10, 11, 12, 13, 14) indirectly or directly to define different gears; and driving gears (23, 24) fixed on the two countershafts (6, 7) and engaged with a differential gear (25),
**characterized in that** for each of the countershafts (6; 7), between the corresponding driving gear (23; 24) of the corresponding countershaft (6; 7) and at least one of the idler gears (8, 9, 10; 11, 12, 13, 14) of the corresponding countershaft (6; 7), there is disposed a bearing (33A; 35A) of the corresponding countershaft (6; 7).

2. A double clutch transmission (100B) of the claim 1, wherein for each of the countershafts (6; 7), between the corresponding driving gear (23; 24) of the corresponding countershaft (6; 7) and all the idler gears (8, 9, 10; 11, 12, 13, 14) of the corresponding countershaft (6; 7), there are disposed bearings (33A; 35A) of the corresponding countershaft (6; 7).

3. A double clutch transmission (100B) of the claim 1 or 2, wherein at least one of the driving gears (23, 24) is only disposed at one side.

4. A double clutch transmission (100B) of the claim 3, wherein both the driving gears (23, 24) are only disposed at one side.

5. A double clutch transmission (100B), in particular as the transmission of any of the preceding claims, comprising:
two clutches (1, 2) whose input ends are connected with a propeller shaft (3) of a driving engine, and whose output ends are connected with two transmission input shafts (4, 5) arranged coaxially, respectively;
two countershafts (6, 7) which are disposed on bearings (31A, 32A, 33A, 35A), and on which shift gears constructed as idler gears (8, 9, 10, 11, 12, 13, 14) can be rotatably disposed;
shift gears anti-torsionally and axially arranged on the two transmission input shafts (4, 5) and constructed as fixed gears (15, 16, 17, 18), which are engaged with the idler gears (8, 9, 10, 11, 12, 13, 14) indirectly or directly to define different gears; and
driving gears (23, 24) fixed on the two countershafts (6, 7) and engaged with a differential gear (25),
**characterized in that** at least two of bearings (31, 32; 31A, 32A; 33A, 35A) arranged on one side of the transmission are substantially fixed in a single bearing plate at a similar height axially.

6. A double clutch transmission (100B) of the claim 5, wherein the bearings of the transmission input shafts (4, 5) and/or bearings of an intermediate shaft (27) are also fixed in the single bearing plate.

7. A double clutch transmission (100B) of the claim 5 or 6, wherein at each side surface of the transmission, at least two of bearings (31A, 32A; 33A, 35A) arranged on one side of the transmission are substantially fixed in a single bearing plate at a similar height axially.
